# EUROPEAN PATENT SPECIFICATION

(11) **EP 0 796 894 B1**
(45) Date of publication and mention of the grant of the patent: **19.06.2002**
(21) Application number: 97104724.6
(22) Date of filing: 19.03.1997
(51) Int. Cl.: C08L 23/02, C08L 23/10, C08L 23/16, C08L 21/00

(54) **Polyolefin resin composition and coated product thereof**
Polyolefinharzzusammensetzung und beschichtetes Produkt daraus
Composition à base de résine de polyoléfine et produit revêtu de cette composition

(30) Priority: 19.03.1996 JP 9197796
(43) Date of publication of application: 24.09.1997
(73) Proprietor: JAPAN POLYOLEFINS CO., LTD., Tokyo (JP); HONDA GIKEN KOGYO KABUSHIKI KAISHA, Minato-ku, Tokyo (JP)
(72) Inventor: Toshiyuki, Kai, Yokkaichi-shi, Mie (JP); Satoru, Ishigaki, Oita-shi, Oita (JP); Yoshihisa, Saiki, Wako-shi, Saitama (JP)
(74) Representative: Henkel, Feiler, Hänzel

(56) References cited:
- EP-A- 0 299 486
- EP-A- 0 562 582
- US-A- 5 331 046
- PATENT ABSTRACTS OF JAPAN vol. 095, no. 008, 29 September 1995 & JP 07 118488 A (NISSAN MOTOR CO LTD;OTHERS: 01), 9 May 1995, & DATABASE WPI Derwent Publications Ltd., London, GB; AN 95-204006

## Description

### FIELD OF THE INVENTION

The present invention relates to a polyolefin resin composition having excellent coating suitability and to a coated product obtained by coating a molded product of the resin composition. More particularly, this invention relates to a polyolefin resin composition which exhibits good adhesion property with a coating film even when coated without a pretreatment such as a treatment with 1,1,1-trichloroethane (TCE), a corona discharge treatment, etc. Furthermore, the present invention also relates to a coated product of the composition.

### BACKGROUND OF THE INVENTION

Polyolefin resin compositions exhibit excellent moldability when molded by various molding techniques, and are used as interior and exterior parts of transports including motor vehicles and ships or as various structural materials in a wide range of industrial fields such as household electrical appliances, business equipments, office supplies, daily necessaries, household furniture and miscellaneous goods, and building materials. Such molded products of polyolefin resin compositions are often supplied after being coated for the purposes of surface protection, coloring, etc. However, because polyolefin resin compositions are nonpolar materials and thus has a low affinity for coating materials, coating thereof necessitates various pretreatments. Generally known pretreatments include a TCE treatment and a corona discharge treatment.

The TCE treatment provides an effect of etching the surface of molded products, and-other effects to thereby improve adhesion between the molded product bases and coating materials. However, the use of TCE has recently come to be severely restricted or prohibited due to the problem of environmental pollution. The corona discharge treatment, which is a technique for modifying the surface of molded products to improve the affinity of the molded products for coating materials, is disadvantageous in that the shape of molded products which can be treated are limited and that a large investment is necessary for the treatment equipment. Consequently, if molded polyolefin resin compositions are capable of being directly coated without undergoing any of such pretreatments, the number of steps necessary for the coating process can be reduced and the necessity of equipment investment can be avoided. Moreover, the use of harmful substances such as TCE can be eliminated.

Various attempts have been made to impart coating suitability to polyolefin resin compositions. For example, a composition comprising a thermoplastic olefin elastomer and a modified polyolefin added thereto is disclosed in JP-A-6-157838 (the term "JP-A" as used herein means an "unexamined published Japanese patent application"), and a composition comprising an elastomer and a polyolefin modified with an unsaturated hydroxy compound is disclosed in JP-A-5-39383. Further, compositions containing a hydroxy-terminated diene polymer are disclosed in, e.g., JP-A-3-157168, JP-A-5-320442, and JP-A-5-117458. Although coating suitability of these conventional compositions with respect to coating films have been improved to some degree, the improvement is still considerably insufficient and it is difficult to put these compositions to practical use.

Furthermore, compositions comprising both a modified polyolefin resin and a hydroxy-terminated diene polymer are disclosed in, e.g., JP-A-4-93330, JP-A-5-32829, and JP-A-6-145440. However, these conventional compositions, although improved in adhesion property to coating film, are also still insufficient in that property. The above compositions have another problem that the diene polymer is expensive. In addition, coated products obtained therefrom have problems, for example, that the diene polymer bleeds out of the composition and, as a result, dusts and the like are apt to firmly stick to the coating film to impair its appearance, and that since the coated products have insufficient solvent resistance, there are cases where the coating film peels off upon contact with a solvent, in particular, gasoline or a gasohol, i.e., a gasoline/alcohol mixture.

### SUMMARY OF THE INVENTION

An object of the present invention is to provide a coated product which has excellent adhesion property to a coating film, including the solvent resistance, and has good appearance in terms of design, even when the coating is conducted without any pretreatment such as a TCE treatment, a corona discharge treatment, etc.

Another object of the present invention is to provide a polyolefin resin composition which provides such a coated product.

Other objects and effects of the present invention will be apparent from the following description.

As a result of extensive studies made by the present inventors in order to obtain a polyolefin resin composition having excellent coating suitability, mechanical properties, and molding appearance, they have succeeded in accomplishing the above objects by using a combination of two kinds of modified polyolefin resins having different molecular weights.

That is, the above objects of the present invention has been achieved by providing:
(1) a polyolefin resin composition which comprises:
   component (a): from 20 to 79.9 parts by weight of a resin ingredient which comprises a modified polyolefin resin having at least one kind of groups selected from hydroxy, carboxyl and carboxylic anhydride groups and having a weight-average molecular weight (M_{w1}) of not less than 50,000;
   component (b): from 0.1 to 20 parts by weight of a modified polyolefin resin having at least one kind of groups selected from hydroxy, carboxyl-and carboxylic anhydride groups and having a weight-average molecular weight (M_{w2}) of from not less than 500 to less than 50,000 and a melting point of more than 100°C; and
   component (c): from 79.9 to 20 parts by weight of a rubber ingredient comprising a copolymer rubber (provided that the total amount of components (a), (b) and (c) is 100 parts by weight);
(2) the polyolefin resin composition as described in (1) above, wherein the ratio of the weight-average molecular weight (M_{w1}) of the modified polyolefin resin in component (a) to the weight-average molecular weight (M_{w2}) of component (b), M_{w1}/M_{w2}, is not less than 2.0;
(3) the polyolefin resin composition as described above, which further comprises an accelerator (component (d)) comprising at least one of an organotin compound and/or a tertiary amine compound in an amount of from 0.005 to 10 parts by weight per 100 parts by weight of the total amount of components (a), (b) and (c);
(4) the polyolefin resin composition as described above, which further comprises a filler (component (e)) in an amount of not more than 100 parts by weight per 100 parts by weight of the total amount of components (a), (b) and (c); and
(5) a coated polyolefin resin composition comprising a molded product of the polyolefin resin composition as described above and a coating material coated on the molded product, wherein the coating material comprises at least one material selected from urethane, acrylic and melamine coating materials.

### DETAILED DESCRIPTION OF THE INVENTION

The present invention is described in detail below.

In the present invention, the modified polyolefin resin that is used in component (a), which resin has at least one kind of groups selected from hydroxy, carboxyl and carboxylic anhydride groups and has a weight-average molecular weight of not less than 50,000 (hereinafter the resin is referred to as the "modified polyolefin resin in component (a)"), has a principle role in imparting, to the polyolefin resin composition, adhesion property with respect to a coating material.

The modified polyolefin resin in component (a) is obtained by heating an unmodified polyolefin resin together with a modifier (e.g., an unsaturated alcohol, unsaturated carboxylic acid and unsaturated carboxylic anhydride) in the presence of an organic peroxide and/or an azo compound. The above described thermal treatment is generally conducted at from 50 to 300°C, preferably from 100 to 250°C.

Examples of unmodified polyolefin resin which can be used for the preparation of the-modified polyolefin resin in component (a) include low-density polyethylene, high-density polyethylene, linear low-density polyethylene, polypropylene, ethylene/propylene block copolymers, ethylene/propylene random copolymers, polybutene, and mixtures of these (co)polymers. Of these, crystalline polypropylene resins such as propylene homopolymer, ethylene/propylene block copolymers, and ethylene/propylene random copolymers and mixtures thereof are preferred from the standpoint of heat resistance.

In the case where an ethylene/propylene random copolymer is used as the unmodified polyolefin resin, the ethylene content thereof is generally less than 20% by weight, preferably not more than 10% by weight, more preferably not more than 7% by weight. If the ethylene content thereof is not less than 20% by weight, the resulting heat resistance is deteriorated.

The ethylene/propylene block copolymers generally have a rubber component content of not more than 50% by weight. For maintaining satisfactory heat resistance, the rubber component content thereof is preferably not more than 40% by weight, more preferably not more than 30% by weight.

In the case of using a block copolymer, any rubber component contained therein is estimated to be excluded from component (a) and to be included in component (c).

Further, the ethylene/propylene copolymers may further comprise an optional comonomer unit other than ethylene and propylene units in an amount which does not substantially impair the effects of the present invention (e.g., not more than 15% by weight, preferably not more than 10% by weight). Examples of the optional comonomers include α-olefins such as 1-butene, 3-methyl-1-butene, 4-methyl-1-butene, 4-methyl-1-pentene, 1-hexene and 1-pentene and unconjugated dienes such as 1,4-hexadiene, 1,5-heptadiene and 1,7-octadiene.

Examples of the organic peroxides for use in the preparation of the modified polyolefin resin in component (a) include dibenzoyl peroxide, p-chlorobenzoyl peroxide, dicumyl peroxide, di-t-butyl peroxide, t-butyl cumyl peroxide, 1,3-bis(t-butylperoxy)isopropylbenzene, 2,5-bis(t-butylperoxy)-2,5-dimethylhexane, 2,5-bis(t-butylperoxy)-2,5-dimethyl-3-hexyne, 1,1-bis(t-butylperoxy)-3,3,5-trimethylcyclohexane, t-butyl peroxybenzoate, and mixtures thereof.

Examples of the azo compounds for use in the preparation of the modified polyolefin resin in component (a) include 2,2-azobisisobutyronitrile, 2,2-azobis(4-methoxy-2,4-dimethylvaleronitrile), 2,2-azobis(2,2,4-trimethylpentane), and mixtures thereof.

These organic peroxides and azo compounds may be added after being diluted with an inert substance such as polyolefins, plasticizers, calcium carbonate and white carbon.

The addition amount of the organic peroxide and azo compound is generally from 0.005 to 10 parts by weight per 100 parts by weight of the polyolefin resin. The addition amount thereof is preferably not less than 0.05 parts by weight for increasing the grafting amount of the modifier such as an unsaturated alcohol, an unsaturated carboxylic acid, and the like, and is preferably not more than 3 parts by weight for preventing the polyolefin resin from being excessively crosslinked or reduced in molecular weight.

Examples of the unsaturated alcohol, among the modifiers for the preparation of the modified polyolefin resin in component (a), include hydroxyethyl acrylate, hydroxyethyl methacrylate, hydroxypropyl acrylate, hydroxypropyl methacrylate, polyethylene glycol monoacrylates, polyethylene glycol monomethacrylates, polypropylene glycol monoacrylates, polypropylene glycol monomethacrylates, glycerol mono- or di-acrylate, glycerol mono- or di-methacrylate, trimethylolpropane mono- or di-acrylate, trimethylolpropane mono- or di-methacrylate, ethylene glycol monoallyl ether, propylene glycol monoallyl ether, polyethylene glycol monoallyl ether, polypropylene glycol monoallyl ether, o-, m-, and p-hydroxymethylstyrenes, and mixtures thereof.

Preferred of these are hydroxyethyl acrylate, hydroxyethyl methacrylate, hydroxypropyl acrylate, hydroxypropyl methacrylate, polyethylene glycol monoacrylates in which the oxyethylene chain has a degree of polymerization of not more than 10, polyethylene glycol monomethacrylates in which the oxyethylene chain has a degree of polymerization of not more than 10, and polypropylene glycol monomethacrylates in which the oxypropylene chain has a degree of polymerization of not more than 10, because these unsaturated alcohols can readily modify the polyolefin resin and are especially effective in imparting coating suitability.

Examples of the unsaturated carboxylic acid, among the modifiers for use in the present invention, include acrylic acid, methacrylic acid, crotonic acid, maleic acid, fumaric acid, itaconic acid, citraconic acid, tetrahydrophthalic acid, norbornene-5,6-dicarboxylic acid, and mixtures thereof.

Examples of the unsaturated carboxylic anhydride, among the modifiers for use in the present invention, include anhydrides of acrylic, methacrylic, crotonic, maleic, itaconic, tetrahydrophthalic and norbornene-5,6-dicarboxylic acids and mixtures thereof.

The addition amount of the modifier is generally from 0.1 to 10% by weight, preferably from 1 to 5% by weight, based on the amount of the unmodified polyolefin resin to be modified. If the addition amount thereof is smaller than 0.1% by weight, it is difficult-to incorporate hydroxy, carboxyl or carboxylic anhydride groups in an amount necessary for improving coating suitability. Although the amount of hydroxy, carboxyl or carboxylic anhydride groups in the modified polyolefin resin in component (a) can be increased by increasing the addition amount of the modifier, addition amounts thereof exceeding 10% by weight are undesirable in that the resulting modified polyolefin resin exerts adverse influences on material properties of the polyolefin resin composition and on the appearance of a molded product therefrom. Methods for the modification by grafting are not particularly limited, and any of melt grafting methods, solution grafting methods and solid-phase grafting methods can be employed.

The modified polyolefin resin in component (a) for use in the present invention can also be obtained by indirectly incorporating hydroxy groups as follows. That is, a compound having a functional group capable of being converted to a hydroxy group is grafted onto the unmodified polyolefin resin, and the compound incorporated into the resin is then subjected to a chemical reaction, to thereby obtain a modified polyolefin resin.

Specifically, the above modification method comprises grafting an unsaturated dicarboxylic anhydride (e.g., maleic anhydride, itaconic anhydride, tetrahydrophthalic anhydride, etc.) onto the unmodified polyolefin resin and then reacting the resulting grafted product with an amino-alcohol (e.g., ethanolamine, propanolamine, butanolamine, etc.).

The modified polyolefin resin in component (a) prepared by any of the methods described above has a weight-average molecular weight of not less than 50,000. Weight-average molecular weights thereof lower than 50,000 result not only in insufficient coating suitability, but also in reduced mechanical strength. The weight-average molecular weight thereof is preferably not less than 70,000, more preferably 100,000.

The content of hydroxy, carboxyl and carboxylic anhydride groups in the modified polyolefin resin in component (a) is generally from 0.001 to 2.0 mmol/g, preferably from 0.01 to 1.0 mmol/g, more preferably from 0.03 to 0.7 mmol/g, particularly preferably from 0.05 to 0.5 mmol/g.

In component (a) in the present invention, the content of the modified polyolefin resin may be 100% by weight. The content thereof should be at least 1% by weight, and is preferably not less than 5% by weight, more preferably not less than 10% by weight, most desirably not less than 15% by weight. If the content thereof is less than 1% by weight, the resulting coating suitability become insufficient.

Examples of ingredients which may be contained in component (a) in the present invention other than the modified polyolefin resin include unmodified polyolefin resins. Examples thereof include the same unmodified polyolefin resins as those enumerated above as a starting material for use in the graft-modification. Of these, crystalline polypropylene resins such as propylene homopolymer, ethylene/propylene block copolymers, ethylene/propylene random copolymers, and mixtures thereof are preferred from the standpoint of heat resistance.

As the ethylene/propylene random copolymer and the ethylene/propylene block copolymer for use herein, those having an ethylene content and a rubber content falling within the respective ranges as specified above may be used.

Other examples of the unmodified polyolefin resin include low-density polyethylene, high-density polyethylene, linear low-density polyethylene, polybutene and copolymers of ethylene and other copolymerizable monomers (e.g., vinyl acetate).

The weight-average molecular weight of the unmodified polyolefin resin for use in component (a) is preferably from 50,000 to 800,000, more preferably from 100,000 to 500,000, and the melting point thereof is preferably not less than 130°C, more preferably not less than 150°C, particularly preferably not less than 157°C.

The modified polyolefin resin of component (b) for use in the present invention, which contains at least one kind of groups selected from hydroxy, carboxyl and carboxylic anhydride groups, has a weight-average molecular weight of from not less than 500 to less than 50,000 and a melting point of more than 100°C, can be obtained by treating an unmodified polyolefin resin with a modifier (e.g., an unsaturated alcohol, an unsaturated carboxylic acid, unsaturated carboxylic anhydride, etc.) in the presence or absence of an organic peroxide or an azo compound. Specifically, the modified polyolefin resin for use as component (b) can be prepared by the same methods as those for the modified polyolefin resin in component (a).

Examples of the unmodified polyolefin resin which can be used for preparing component (b) include the same unmodified polyolefin resins as those enumerated above as a starting material for the modified polyolefin resin in component (a). Of these, crystalline polypropylene resins such as propylene homopolymer, ethylene/propylene block copolymers, ethylene/propylene random copolymers and mixtures thereof are preferred from the standpoint of heat resistance.

In the case where an ethylene/propylene random copolymer is used as the unmodified polyolefin resin, the ethylene content thereof is generally less than 20% by weight, preferably not more than 10% by weight, more preferably not less than 7% by weight. The ethylene content thereof of not less than 20% by weight results in impaired heat resistance.

The ethylene/propylene block copolymer for use herein generally has a rubber component content of not more than 50% by weight. For maintaining satisfactory heat resistance, the rubber component content thereof is preferably not more than 40% by weight, more preferably not more than 30% by weight.

In the case of using a block copolymer, any rubber component contained therein is estimated to be excluded from component (a) and to be included in component (c).

In the preparation of component (b), a low-molecular weight unmodified polyolefin resin obtained by pyrolyzing a high-molecular unmodified polyolefin resin can be advantageously used. Use of such an unmodified polyolefin resin facilitates the synthesis of a modified polyolefin resin having a weight-average molecular weight within the above specified objective range, i.e., from not less than 500 to less than 50,000.

Useful examples of the organic peroxide and azo compound are the same as those enumerated above with regard to the modified polyolefin resin in component (a).

The addition amount of the modifier in the preparation of component (b) is generally from 0.1 to 50% by weight, preferably from 1 to 30% by weight, based on the amount of the unmodified polyolefin resin to be modified. If the addition amount thereof is less than 0.1% by weight, it is difficult to incorporate hydroxy, carboxyl or carboxylic anhydride groups in an amount necessary for improving coating suitability. Although the amount of hydroxy, carboxyl or carboxylic anhydride groups in component (b) can be increased by increasing the addition amount of the modifier, addition amounts thereof exceeding 50% by weight are undesirable in that the resulting modified polyolefin resin exerts adverse influences on material properties of the polyolefin resin composition and on the appearance of a molded product therefrom.

The weight-average molecular weight of component (b) is not less than 500 and less than 50,000, preferably from 1,000 to 45,000, more preferably from 3,000 to 40,000, and most preferably from 5,000 to 30,000. If the weight-average molecular weight thereof is less than 500, the mechanical strength, molding appearance and coating suitability of the polyolefin resin composition are adversely influenced. If the weight-average molecular weight thereof exceeds 50,000, the resulting coating suitability becomes insufficient.

The content of hydroxy, carboxyl and carboxylic anhydride groups in the thus-obtained component (b) is generally from 0.01 to 6.0 mmol/g, preferably from 0.05 to 4.0 mmol/g, more preferably from 0.1 to 3.0 mmol/g, particularly preferably from 0.5 to 2.0 mmol/g.

Component (b) in the present invention has a melting point exceeding 100°C, because incorporation of component (b) having such a melting point enables the polyolefin resin composition to have satisfactory heat resistance and give a coated product in which the coating film adhesion to the molded product is stable against solvents, i.e., the coated product has satisfactory solvent resistance. The melting point thereof is preferably more than 110°C, more preferably more than 120°C, most preferably more than 130°C.

The melting point of component (b) is determined as follows. Using a differential scanning calorimeter, a sample is heated to 200°C at a rate of 10°C/min, subsequently cooled to -30°C, and then re-heated at a rate of 10°C/min. The temperature at which a melting peak appears during the re-heating is taken as the melting point.

A commercially available differential scanning calorimeter can be advantageously used for the melting point determination.

Examples of the copolymer rubber for use in component (c) in the present invention include ethylene/α-olefin copolymer rubbers, isoprene/isobutylene copolymer rubbers and styrene copolymer rubbers.

Examples of the ethylene/α-olefin copolymer rubbers include ethylene/propylene copolymer rubbers (hereinafter abbreviated as EPM), ethylene/butene copolymer rubbers (hereinafter abbreviated as EBM), ethylene/propylene/diene copolymer rubbers (hereinafter abbreviated as EPDM), and mixtures thereof. These rubbers generally have an ethylene content of from 20 to 85% by weight, preferably from 30 to 80% weight, more preferably from 40 to 70% by weight.

Examples of the diene in EPDM include 1,4-pentadiene, 1,4-hexadiene, cyclohexadiene, dicyclopentadiene and 5-ethylidene-2-norbornene.

The ethylene/α-olefin copolymer rubbers herein include the rubber components contained in propylene block copolymers. Examples of such rubber components include ethylene/propylene copolymer rubbers, ethylene/butene copolymer rubbers and ethylene/propylene/butene copolymer rubbers. The amount of the rubber component contained in a propylene block copolymer can be determined by the following method. Into 500 ml of xylene is dissolved 5 g of the polymer at 135°C with stirring. After 20 minutes, the solution is cooled to 25°C with stirring and then allowed to stand for 30 minutes. The resulting precipitate is taken out with a filter paper, and the filtrate solution is evaporated in a nitrogen stream. The residue is dried at 80°C in a vacuum until a constant weight is reached. Thus, the content (wt%) of polymer components soluble in room-temperature xylene is calculated. This content is taken as the content of rubber components.

Examples of the isoprene/isobutylene copolymer rubbers include substantially noncrystalline isoprene/isobutylene copolymer rubbers obtained by known methods. The isoprene/isobutylene copolymer rubbers have an isoprene content of generally from 0.5 to 10% by weight, preferably from 1 to 4% by weight. Examples of such copolymer rubbers also include those containing from 0.1 to 3.0 wt% chlorine, bromine, or the like incorporated therein through partial substitution or addition.

Examples of the styrene copolymer rubbers include rubbery random or block copolymers of a styrene compound (e.g., styrene, α-methylstyrene, etc.) and a conjugated diene (e.g., 1,3-butadiene, isoprene, etc.), and rubbers obtained by hydrogenating these copolymers. Preferred of these styrene elastomers are styrene compound/conjugated diene block copolymers.

Specific examples of these styrene copolymer rubbers include styrene/conjugated diene block copolymers such as styrene/butadiene random copolymers, styrene/isoprene random copolymers, styrene/butadiene/styrene triblock copolymers, styrene/isoprene/styrene triblock copolymers, styrene/butadiene block copolymers in which each polybutadiene segment is terminated by a polystyrene block, styrene/isoprene block copolymers in which each polyisoprene segment is terminated by a polystyrene block, styrene/butadiene multiblock copolymers and styrene/isoprene block copolymers, and hydrogenation products obtained from these copolymers. Preferred of these styrene copolymer rubbers are hydrogenated styrene/conjugated diene block copolymers.

These ethylene/α-olefin-copolymer rubbers, isoprene/isobutylene copolymer rubbers and styrene copolymer rubbers preferably have an MFR (as measured in accordance with JIS K7210 at 230°C under a load of 2.16 kg) of not more than 100 g/10 min and not less than 0.001 g/10 min. If the MFR thereof exceeds 100 g/10 min, the resulting thermoplastic resin composition containing such component (c) has reduced mechanical strength. If the MFR thereof is lower than 0.001 g/10 min, the resulting thermoplastic resin composition has impaired flowability.

The content of a copolymer rubber in component (c) may be 100%. The content thereof is generally at least 10% by weight, preferably not less than 30% by weight, more preferably not less than 50% by weight. If the content thereof is lower than 10% by weight, the resulting thermoplastic resin composition has reduced mechanical strength.

Component (c) may further comprise a rubber such as natural rubber or a synthetic rubber (e.g., polyisoprene rubber) and a softener such as a process oil as an ingredient other than the above described copolymer rubber. Softeners are added to accelerate plasticization of rubber ingredients and to improve the flowability of the thermoplastic resin composition obtained or for other purposes. Any of paraffinic, naphthenic and aromatic hydrocarbon softeners may be used.

The incorporation amount of each component in the polyolefin resin composition of the present invention is then explained. The incorporation amount of component (a) in the present invention is from 20 to 79.9 parts by weight, preferably from 30 to 79.9 parts by weight, more preferably from 40 to 79.9 parts by weight, per 100 parts by weight of the polyolefin resin composition. Component (a) amounts exceeding 79.9 parts by weight result in reduced coating suitability and reduced impact resistance, while amounts thereof smaller than 20 parts by weight result in insufficient heat resistance and stiffness.

The incorporation amount of component (b) is from 0.1 to 20 parts by weight, preferably from 0.5 to 15 parts by weight, more preferably from 2 to 10 parts by weight, per 100 parts by weight of the composition. Component (b) amounts smaller than 0.1 part by weight result in insufficient coating suitability, while amounts thereof exceeding 20 parts by weight result in reduced impact resistance and impaired molding appearance.

The incorporation amount of component (c) is from 79.9 to 20 parts by weight, preferably from 60 to 20 parts by weight, more preferably from 50 to 25 parts by weight, per 100 parts by weight of the composition. Component (c) amounts smaller than 20 parts by weight result in insufficient coating suitability and insufficient impact resistance, while amounts thereof exceeding 79.9 parts by weight result in reduced heat resistance and stiffness.

Although the MFR of the polyolefin resin composition of the present invention (as measured in accordance with JIS K7210 at 230°C under a load of 2.16 kg) is not particularly limited, it is usually from 0.01 to 500 g/10 min.

The reason why the polyolefin resin composition of the present invention is superior in coating suitability to compositions which do not contain component (b) is presumed to be as follows. In the compositions not containing component (b), polar groups of component (a) are less apt to be present on the surface of the resulting molding, so that effective interaction does not occur between the molding surface and a coating material. On the other hand, in the polyolefin resin composition of the present invention, component (b) is presumed to be present on the surface of the resulting molding in a higher concentration than in the inner parts of the molding, because it is known that in a resin composition, resin components having relatively lower molecular weights are apt to be present in a higher concentration on and near the surface of a molding than in the inner parts,thereof. Due to such uneven distribution of component (b) in the composition of the present invention, polar groups of component (a) are also present in a higher concentration on and near the molding surface than in the inner parts thereof. As a result, effective interaction occurs between the molding surface and a coating composition.

The above presumption indicates that component (a) preferably has a high molecular weight from the standpoint of the physical properties of the polyolefin resin composition, while component (b) preferably has a low molecular weight from the standpoint of coating suitability. Consequently, the larger the difference in molecular weight between components (a) and (b), the more the above effect become marked and the more the mechanical strength and coating suitability of the molded product obtained from the composition are improved. In particular, from the standpoint of enhancing coating suitability in the present invention, the ratio of the weight-average molecular weight (M_{w1}) of the modified polyolefin resin in component (a) to the weight-average molecular weight (M_{w2}) of component (b), i.e., M_{w1}/M_{w2}, is preferably not less than 2.0, more preferably not less than 4.0, particularly preferably not less than 7.0, and most preferably not less than 10.0.

For accelerating the reaction between a hydroxy, carboxyl or carboxylic anhydride group contained in the polyolefin resin composition of the present invention and a coating material to enhance the adhesion strength of the coating film, a compound which accelerates the reaction of the above described functional groups with the coating material (hereinafter the compound is referred to as "accelerator") is preferably incorporated as component (d) in a small amount. Useful examples thereof include, for example, organotin compounds, tertiary amine compounds, lead compounds, titanium compounds, cobalt compounds, aluminum compounds, zinc compounds, iron compounds, carboxylic acid salts of alkaline metals, bismuth compounds, and the like.

Examples of the organotin compound include mono-, di- or tri-alkyltin carboxylates or alkoxides such as dibutyltin dilaurate, dibutyltin distearate, dibutyltin maleate, dibutyltin dioctylmaleate, dibutyltin diacetate, dibutyltin 2-ethylhexanoate, tributyltin acetate and dibutyltin dibutoxide; and tetraalkyl distannoxane compounds such as tetrabutyl 1,3-diacetoxydistannoxane. The term "alkyl" used herein means any of hydrocarbon groups which have from 1 to 30 carbon atoms and may be linear or branched. The alkyl group also includes such hydrocarbon groups having one or more unsaturated bonds. Also effective are organotin compounds such as dibutyltin bisacetylacetonate and di-2-ethylhexyltin oxide.

Examples of the tertiary amine compound include tetraalkylethylenediamines, N,N-dialkylbenzylamines, N,N-dialkylanilines, N,N-dialkylethanolamines, 1,4-diazabicyclo(2.2.2)octane, 1,8-diazabicyclo(5.4.0)-7-undecene and N,N-dialkylaminopyridines. The term "alkyl" used herein means any of hydrocarbon groups which have from 1 to 30 carbon atoms and may be linear or branched. Further, the alkyl group also include such hydrocarbon groups having one or more unsaturated bonds.

Examples of the lead compound include lead benzoate, lead octylate, lead stearate and lead oleate. Examples of the titanium compound include tetra-2-ethylhexyl titanate, tetrabutyl titanate and tetrapropyl titanate. Examples of the cobalt compound include cobalt naphthenate, cobalt octylate, cobalt benzoate, cobalt oleate and cobalt stearate. Examples of the aluminum compound include aluminum acetate, aluminum oleate, aluminum propoxide, aluminum butoxide and aluminum stearate. Examples of the zinc compound include zinc naphthenate, zinc octylate, zinc oleate and zinc stearate. Examples of the iron compound include iron octylate, iron oleate, iron stearate, iron acetylacetonate and iron chloride. Examples of the carboxylic acid salt of an alkali metal include lithium, sodium, potassium, rubidium and cesium salts of a carboxylic acid such as acetic acid, propionic acid, oleic acid, stearic acid and benzoic acid. Examples of the bismuth compound include bismuth nitrate and bismuth acetate. Other examples of the accelerator include compounds such as those given in *J*. *Appl*. *Polym*. *Sci.,* Vol. 4, No. 11, pp. 207-211 (1960). Mixtures of these can also be used.

The accelerator for use in the present invention preferably comprises at least one of an organotin compound and a tertiary amine compound.

The addition amount of the accelerator of component (d) is generally from 0.005 to 10 parts by weight, preferably from 0.02 to 5 parts by weight, more preferably from 0.05 to 3 parts by weight, per 100 parts by weight of the total amount of components (a), (b), and (c). Addition amounts thereof smaller than 0.005 parts by weight result in an insufficient effect. Even if component (d) is added in an amount exceeding 10 parts by weight, the effect of the incorporation thereof cannot be enhanced any more, and such large addition amounts produce adverse influences including bleeding.

An inorganic or organic filler such as an loading agent, reinforcing agent, etc. can be added as component (e) to the polyolefin resin composition of the present invention. Examples thereof are shown below. A combination of two or more thereof may be used.

Examples of the inorganic filler include calcium carbonate, talc, silica, kaolin, clay, diatomaceous earth, calcium silicate, mica, asbestos, alumina, barium sulfate, aluminum sulfate, calcium sulfate, magnesium carbonate, carbon fibers, glass fibers, glass beads, molybdenum sulfide, graphite and shirasu balloons. Also useful are fillers obtained by modifying these fillers by treating the surface thereof with a silane compound or a titanium compound.

Examples of the organic filler include organic fibers such as acrylic fibers, aramid fibers, nylon fibers and polyester fibers, and organic gels such as a polystyrene gel.

The use amount of the filler is not more than 100 parts by weight per 100 parts by weight of the total amount of components (a), (b) and (c). Amounts thereof exceeding 100 parts by weight result in reduced moldability and impaired molding appearances.

The composition may contain optional ingredients such as resins other than polyolefins, rubbers and additives as long as the incorporation thereof does not result in deviation from the spirit of the invention. Examples of the additives include heat stabilizers, weathering stabilizers, colorants, antistatic agents, flame retardants, nucleating agents, lubricants, slip agents and antiblocking agents. Useful as the heat stabilizers are known compounds such as phenolic, phosphorus and sulfur compounds. Useful as the weathering stabilizers are known compounds such as hindered amine and triazole compounds. Examples of the colorants include carbon black, titanium white, zinc white, red iron oxide, azo compounds, nitroso compounds and phthalocyanine compounds. Also, with respect to each of the antistatic agents, flame retardants, nucleating agents, lubricants, slip agents, antiblocking agents, etc., known compounds can be used.

The polyolefin resin composition of the present invention can be prepared by premixing component (a) with components (b) and (c) optionally further with components (d) and (e) by means of a Henschel mixer, etc., and then kneading the mixture with heating by means of an ordinary twin- or single-screw extruder or a kneading machine such as a Banbury mixer. The temperature for kneading is preferably not lower than the softening points of the polyolefin resins used, and is generally from 100 to 300°C.

The thermoplastic resin composition thus obtained can be molded by an ordinary molding technique such as extrusion molding, injection molding and press molding. Coated moldings can be obtained by coating the molding for coloring or surface protection. Coating materials useful for the coating include acrylic, urethane, melamine and epoxy coating materials. Preferred of these are urethane coating materials, acrylic coating materials and melamine coating materials. These coating materials each may be either a two-pack or a one-pack type composition. Besides the coating materials enumerated above, any coating material can be used as long as it has an affinity for functional groups such as hydroxy, carboxyl and carboxylic anhydride groups.

For applying the coating material, generally employed techniques can be used in the present invention, and examples thereof include coating with a spray gun, coating by brushing, and coating with a roll coater.

The thickness of the coating film is not particularly limited, and may be varied according to the uses of moldings. In general, however, the coating film thickness is from 1 to 500 µm on a dry basis.

The coated product obtained by coating the thermoplastic resin composition of the present invention is excellent in appearance and physical properties of the surface. The reason for this is as follows. Although the thermoplastic resin composition of the present invention provides a molding which is not always satisfactory in properties such as abrasion resistance and mar resistance because of the inherent characteristics of polyolefin resins, the appearance and physical properties of the surface are greatly improved by coating. Thus, a coated product having an excellent appearance is provided.

The molded product thus coated can be used as various industrial parts, examples of which include exterior parts automobile such as bumpers, corner bumpers, bumper air dam skirts, mudguards, side moldings, wheel caps, spoilers, side steps and outside mirror bases, interior parts for automobile parts such as instrument panels, levers, knobs, dash-boards and door liners, electrical parts such as connectors and cap plugs and other parts in electrical products such as water heater pots, refrigerators, lighting fixtures, audio apparatus and office automation apparatus, and daily miscellaneous goods such as color boxes and container cases.

The present invention will be described in more detail with reference to the following Examples, but the invention should not be construed as being limited thereto. In the Examples, the following measurement methods and the following resins were used. All parts are by weight unless otherwise indicated.

### (1) Evaluation of Coating Suitability

### Coating material:

Primer (RB150, manufactured by Nippon Bee Chemical Co., Ltd.)
Two-pack urethane coating (R271, manufactured by Nippon Bee Chemical Co., Ltd.)

(i) Solvent Resistance
   Coated samples were cut into strips having the same section. The strips were immersed in a 20°C gasoline/ethanol mixture (90/10 by volume) solution, and the time required for each coating film to peel off was measured.
(ii) Crosscut Peeling
   Each coated surface was crosshatch-wise (crossing at a right angle) incised at an interval of 2 mm to form 100 squares. An adhesive cellophane tape was tightly adhered to the incised surface and then stripped quickly. The samples which suffered no peeling are indicated by O, those in which the squares partly peeled off are indicated by Δ, and those in which at least a half of the squares peeled off are indicated by ×.
(iii) Peel Strength

Each coating film was incised at an interval of 10 mm, and the coating film strip having a width of 10 mm were subjected to 180° peeling at 23°C and a peeling speed of 50 mm/min.

### (2) Evaluation of Physical Properties

(i) MFR
   Measurement was made in accordance with JIS K7210 (load, 2.16 kg; temperature, 230°C).
(ii) Flexural Modulus
   Measurement was made in accordance with JIS K7203 at 23°C.
(iii) Notched Izod Impact Strength
   Measurement was made in accordance with JIS K7110 at -30°C.
(iv) Heat Distortion Temperature
   Measurement was made in accordance with JIS K7207 ("Table 1B Method"; load, 4.6 kgf/cm²).
(v) Weight-average Molecular Weight
   Measurement was made with gel permeation chromatograph 150C manufactured by Waters Inc. (column, Shodex AT-806MS) at 130°C using 1,2,4-trichlorobenzene as a solvent.
(vi) Melting Point
   Measurement was made by the following method with differential scanning calorimeter DSC7 manufactured by Perkin-Elmer Corp. A sample was heated to 200°C at a rate of 10°C/min, subsequently cooled to -30°C, and then re-heated at a rate of 10°C/min. The temperature at which a melting peak appeared during the re-heating was taken as the melting point.

### Modified Polyolefin Resins in Component (a)

### Modified PO-1:

Propylene homopolymer modified with 2-hydroxyethyl methacrylate (hereinafter referred to as HEMA).

### SYNTHESIS EXAMPLE 1

Using a Henschel mixer, 100 parts by weight of propylene homopolymer (MFR, 0.5 g/10 min) was dry-blended with 4 parts by weight of HEMA and 1 part by weight of 2,5-bis(t-butylperoxy)-2,5-dimethylhexane. The resulting mixture was kneaded with a 20-mm corotating twin-screw extruder at 180°C to modify the polymer by grafting. The modified polyolefin resin obtained (modified PO-1) had a hydroxy group content of 0.09 mmol/g and a weight-average molecular weight of 110,000.

### Modified PO-2:

Propylene homopolymer modified with acrylic acid (obtained by Synthesis Example 2 below).

### SYNTHESIS EXAMPLE 2

Modification by grafting was conducted in the same manner as in Synthesis Example 1, except that 4 parts by weight of acrylic acid was used in place of HEMA. The modified polyolefin resin thus obtained (modified PO-2) had a carboxyl group content of 0.2 mmol/g and a weight-average molecular weight of 120,000.

### Modified PO-3:

Hydroxylated high-density polyethylene.

### SYNTHESIS EXAMPLE 3

Modification by grafting was conducted in the same manner as in Synthesis Example 1, except that high-density polyethylene (MFR, 20 g/10 min) was used in place of propylene homopolymer and that the amount of 2,5-bis(t-butylperoxy)-2,5-dimethylhexane was changed to 0.3 parts by weight. The modified polyolefin resin thus obtained (modified PO-3) had a hydroxy group content of 0.06 mmol/g and a weight-average molecular weight of 520,000.

### Unmodified Polyolefin Resins

- PP-1:: Ethylene/propylene block copolymer having an MFR of 100 g/10 min in which the content of an ethylene/ propylene copolymer rubber was 18% by weight and the ethylene/propylene copolymer rubber had an ethylene content of 50% by weight.
- PP-2:: Propylene homopolymer having an MFR of 30 g/10 min.
- HDPE:: High-density polyethylene having an MFR of 20 g/10 min.

### Component (b)

- (b-1):: Hydroxylated low-molecular weight propylene homopolymer having a hydroxy value of 54 mg-KOH/g, a hydroxy group content of 0.96 mmol/g, a weight-average molecular weight of 8,500 and a melting point of 163°C; trade name, Umex 1210; manufactured by Sanyo Chemical Industries, Ltd.
- (b-2):: Hydroxylated low-molecular weight polyethylene having a hydroxy value of 58 mg-KOH/g, a hydroxy group content of 1.0 mmol/g, a weight-average molecular weight of 10,500, and a melting point of 105°C; trade name, Umex 2210; manufactured by Sanyo Chemical Industries, Ltd.
- (b-3):: Hydroxylated low-molecular weight ethylene/propylene random copolymer.

### SYNTHESIS EXAMPLE 4

Into 2 liters of xylene were dissolved 150 g of a low-molecular weight ethylene/propylene random copolymer (weight-average molecular weight, 42,000) and 20 g of maleic anhydride at 130°C. To this solution was dropwise added a xylene solution of 3 g of dicumyl peroxide over a period of 3 hours. The resulting mixture was subsequently stirred for 4 hours to obtain a low-molecular weight ethylene/propylene random copolymer modified with maleic anhydride.

Into 1 liter of xylene was dissolved 100 g of the thus-obtained modified ethylene/propylene random copolymer at 130°C. To this solution was added 10 g of monoethanolamine. The resulting reaction mixture was stirred for 6 hours and then cooled to room temperature to obtain a hydroxylated low-molecular weight ethylene/propylene random copolymer (b-3) as the objective polymer. This hydroxylated copolymer had an ethylene content of 5% by weight, a hydroxy value of 52 mg-KOH/g, a hydroxy group content of 0.93 mmol/g, a weight-average molecular weight of 15,000 and a melting point of 135°C.
- (b-4):: HEMA-modified propylene homopolymer.

### SYNTHESIS EXAMPLE 5

Into 2 liters of xylene were dissolved 200 g of low-molecular weight propylene homopolymer (number-average molecular weight, 4,000; trade name, Viscol 550-P; manufactured by Sanyo Chemical Industries, Ltd.) and 20 g of HEMA at 130°C. To this solution was dropwise added a xylene solution of 5 g of 2,5-bis(t-butylperoxy)-2,5-dimethylhexane over a period of 3 hours to modify the polymer by grafting. The modified polyolefin resin thus obtained (b-4) had a hydroxy group content of 0.21 mmol/g, a weight-average molecular weight of 21,000 and a melting point of 164°C.
- (b-5):: Propylene homopolymer modified with maleic anhydride having an acid value of 52 mg-KOH/g, an acid anhydride group content of 1.0 mmol/g, a weight-average molecular weight of 12,000 and a melting point of 162°C; trade name, Umex 1010; manufactured by Sanyo Chemical Industries, Ltd.
- (b-6):: Hydroxylated low-molecular weight propylene homopolymer having a hydroxy value of 35 mg-KOH/g, a hydroxy group content of 0.65 mmol/g, a weight-average molecular weight of 58,000 and a melting point of 160°C; trade name, Umex 1201H; manufactured by Sanyo Chemical Industries, Ltd.

### Component (c)

- EPM:: Ethylene/propylene copolymer rubber having an MFR of 1.0 g/10 min and an ethylene content of 65% by weight.
- IIR:: Isoprene/isobutylene copolymer rubber having an MFR of 1.3 g/10 min and an isoprene content of 8% by weight.
- SEBS:: Hydrogenated styrene/butadiene/styrene triblock copolymer (styrene content, 29% by weight; MFR, 2.0 g/10 min).

### Component (d)

DBTM (dibutyltin maleate) manufactured by Sankyo Organic.Chemicals Co., Ltd.

### EXAMPLE 1

### Preparation of Polyolefin Resin Composition

Using a Henschel mixer, 10 parts by weight of modified PO-1 as a modified polyolefin resin in component (a) and 55 parts by weight of PP-1 as an unmodified polyolefin resin in component (a) (wherein 45.1 parts by weight of the modified PO-1 and PP-1 are taken as component (a) and 9.9 parts by weight thereof are taken as component (c)) were dry-blended with 5 parts by weight of b-1 as component (b), 30 parts by weight of EPM as component (c), 0.05 parts by weight of DBTM as component (d), 8 parts by weight of talc as component (e), and 0.05 parts by weight of calcium stearate and 0.2 parts by weight of a phenolic antioxidant as additives. The resulting mixture was kneaded with a 30-mm corotating twin-screw extruder at 210°C to obtain a polyolefin resin composition according to the present invention.

### Molding of Polyolefin Resin Composition

The polyolefin resin composition obtained above was injection-molded at 210°C and a mold temperature of 42°C to obtain test pieces. The test pieces obtained were conditioned for 2 days in a 23°C thermostatic chamber having a relative humidity of 50%, and then subjected to coating and property evaluation. The results of the property evaluation are shown in Table 2.

### Coating Suitability

The injection-molded products obtained above were washed with a detergent, and then coated with a primer and a two-pack type urethane coating material. The coated products obtained were conditioned for 2 days in a 23°C thermostatic chamber having a relative humidity of 50%, and then evaluated for coating suitability. The results of the evaluation for coating suitability are shown in Table 2.

### EXAMPLES 2 TO 17 AND COMPARATIVE EXAMPLES 1 TO 6

A modified polyolefin resin and an unmodified polyolefin resin both in component (a) were compounded with components (b), (c), (d) and (e) according to the formulations as shown in Table 1 in the same manner as in Example 1. The compositions thus produced were molded, coated, and evaluated in the same manner as in Example 1. The results obtained are shown in Table 2.

### COMPARATIVE EXAMPLE 7

The same procedure as in Example 1 was followed to obtain a composition, except that (b-1) used in Example 1 as component (b) was replaced with the same amount of modified polyolefin resin (b-7) obtained by the process as described below. The thus obtained composition was molded, coated, and evaluated in the same manner as in Example 1. The results obtained are shown in Table 2.

### Preparation of (b-7):

Into a 1-liter flask were placed 420 g of triacontane, 42 g of hydroxyethyl methacrylate and 100 ml of xylene, and heated to 120°C. Subsequently, a xylene solution of 1 g of dicumyl peroxide was dropwise added to the solution with stirring over a period of 4 hours, and the mixture was further stirred for 4 hours. The resulting reaction mixture was then cooled to room temperature, and was subjected to removal of xylene under reduced pressure. The remainder was washed with excess amount of hot methanol, and dried under reduced pressure, to obtain modified polyolefin resin (b-7). The thus-obtained modified polyolefin resin had a hydroxy value of 52 mg-KOH/g, a weight-average molecular weight of 450, and exhibited no apparent melting point.

### COMPARATIVE EXAMPLE 8

The same procedure as in Example 1 was followed to obtain a composition, except that modified PO-1 used in Example 1 as one of component (a) was replaced with the same amount of modified PO-4 obtained by the process as described below. The thus obtained composition was molded, coated, and evaluated in the same manner as in Example 1. The results obtained are shown in Table 2.

### Preparation of modified PO-4:

Into a 2 liters of xylene were dissolved 130 g of propylene homopolymer having a weight-average molecular weight of 120,000, 20 g of maleic anhydride at 130°C. To this solution, a xylene solution of 3 g of dicumyl peroxide was dropwise added to the solution over a period of 3 hours, followed by stirring for 4 hours, to thereby obtain a propylene homopolymer modified with maleic anhydride.

Into 1 liter of xylene was dissolved 100 g of the thus-obtained modified propylene homopolymer at 130°C. To this solution was added 15 g of monoethanolamine, and the mixture was stirred for 6 hours. The resulting reaction mixture was then cooled to room temperature to obtain a hydroxylated propylene homopolymer (modified PO-4). The thus-obtained hydroxylated propylene homopolymer had a hydroxy value of 31 mg-KOH/g, a weight-average molecular weight of 42,000 and a melting point of 159°C.

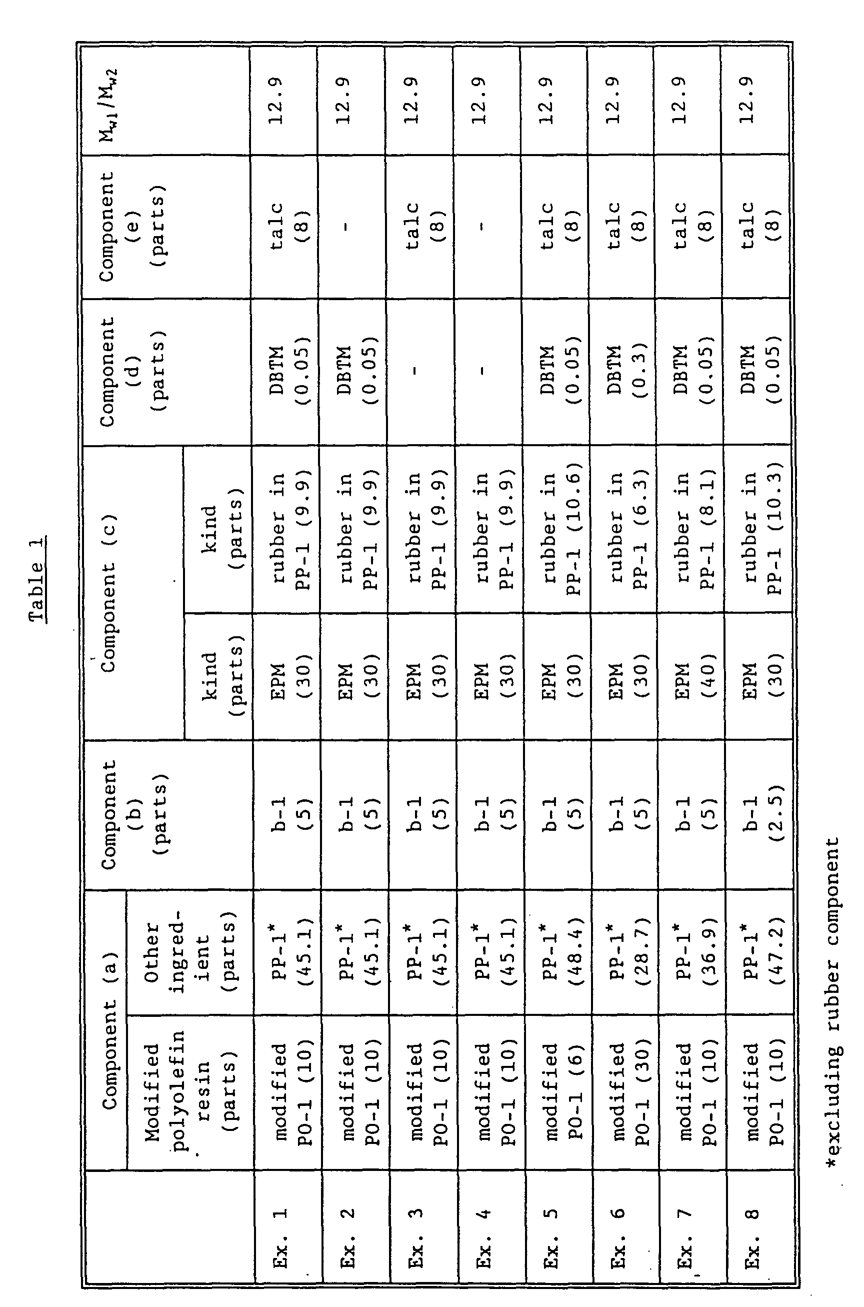

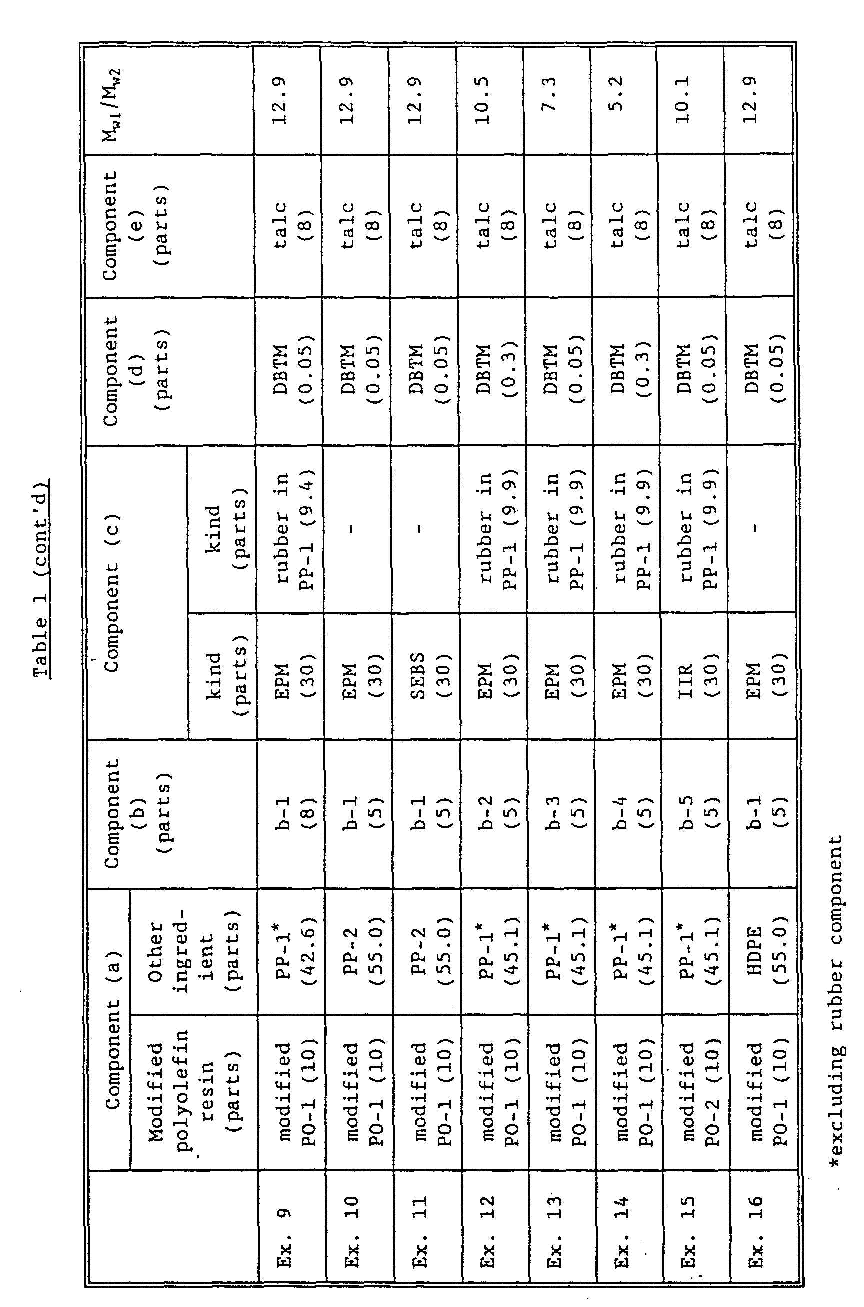

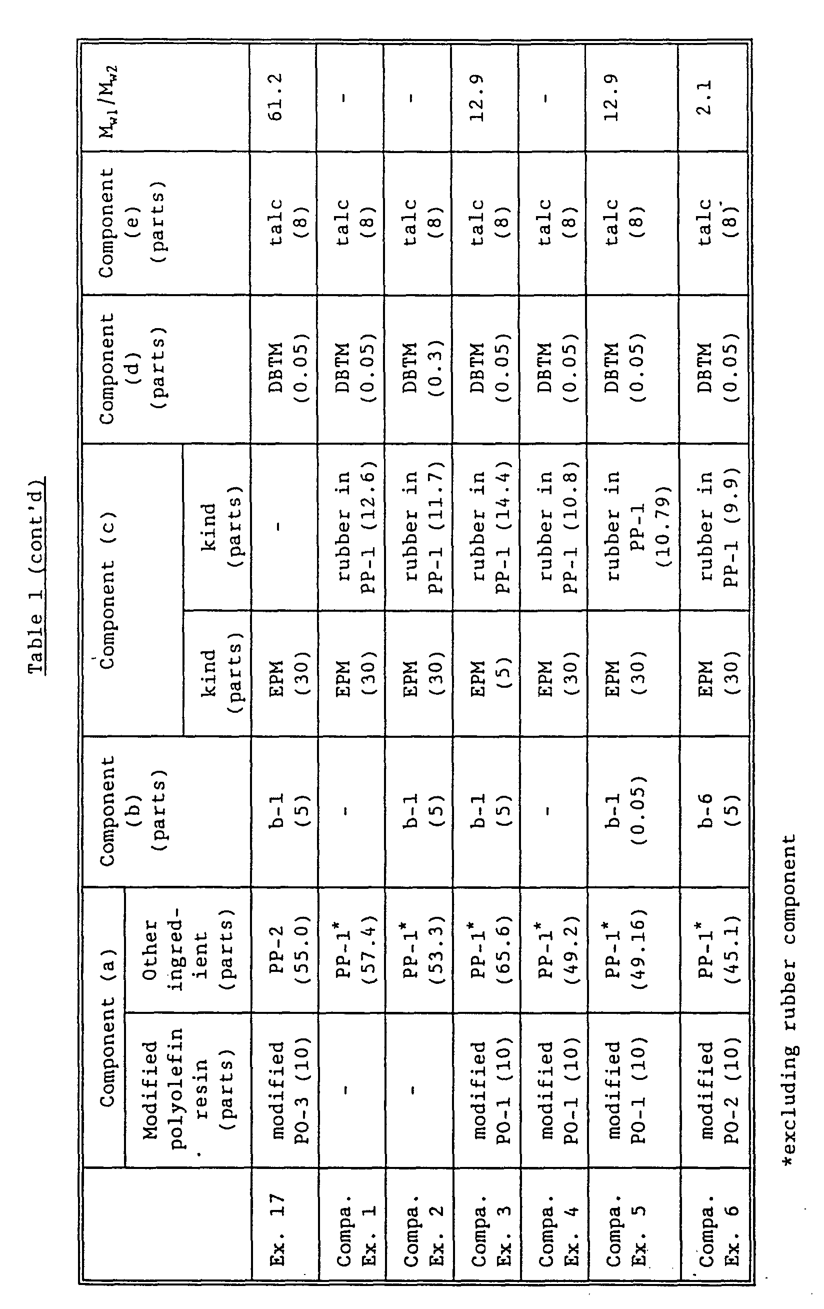

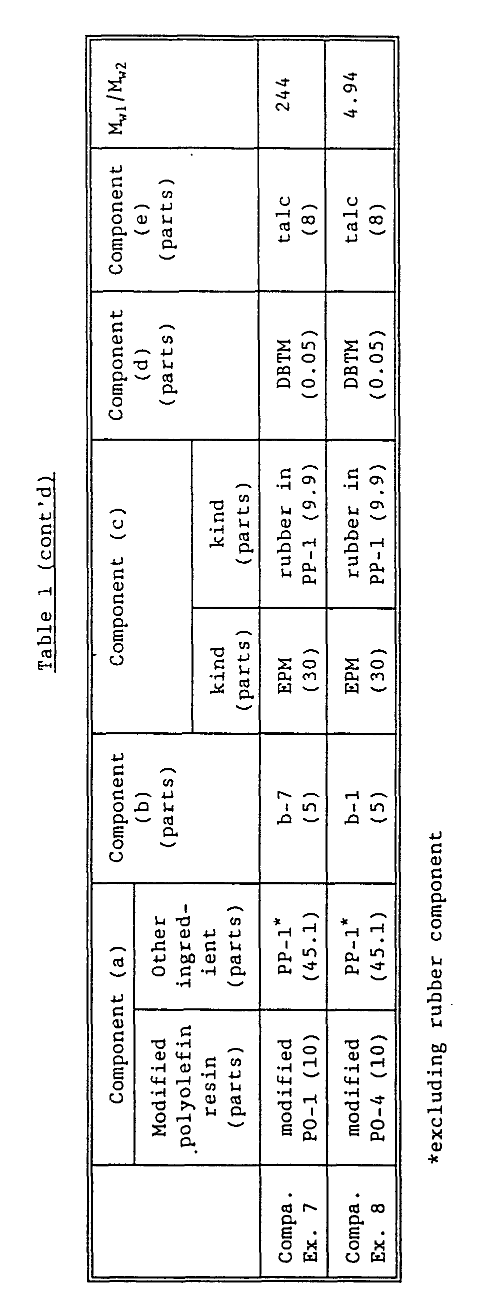

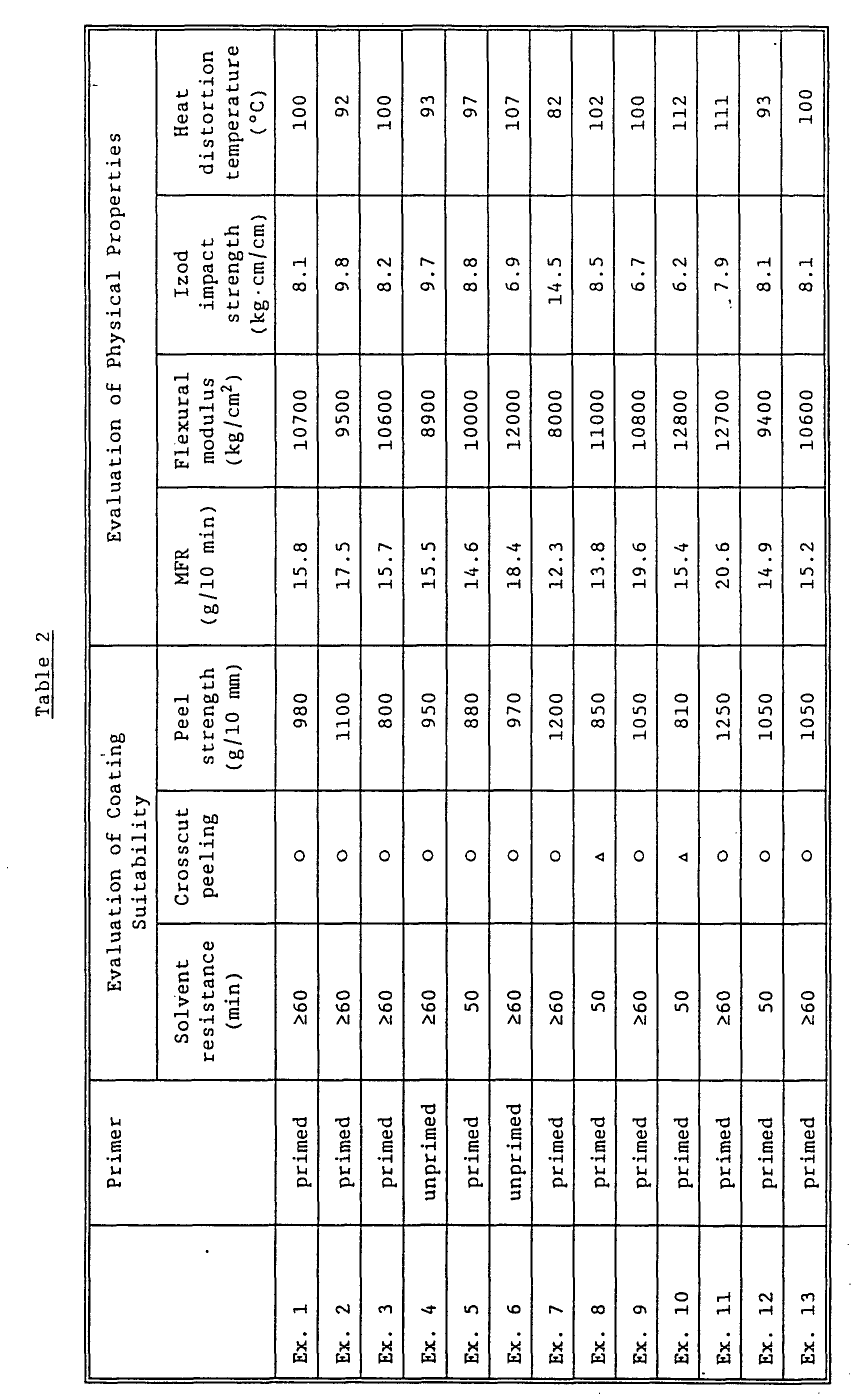

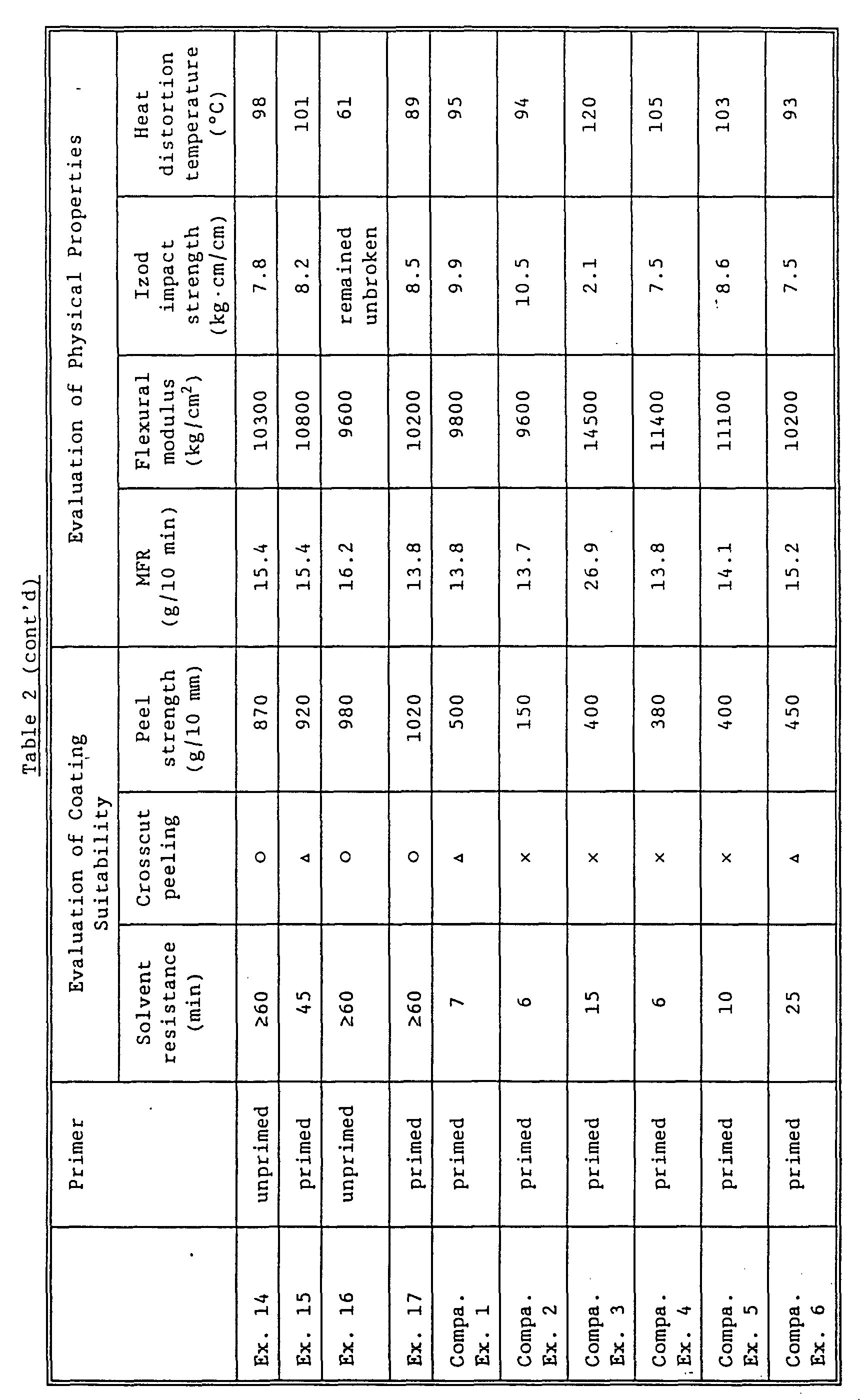

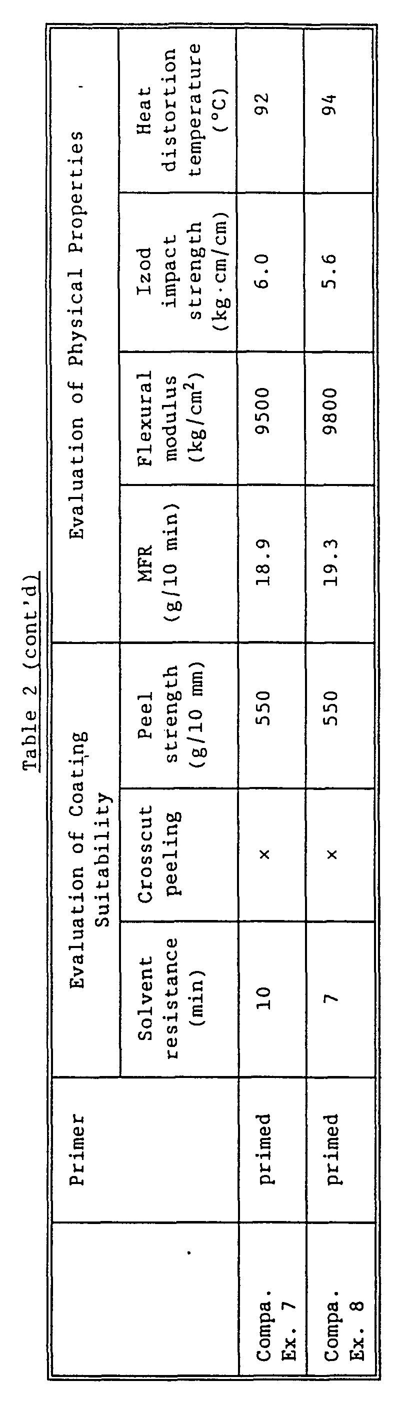

The present invention provides a polyolefin resin composition which can be coated without conducting a pretreatment such as treatment with trichloroethane or corona discharge treatment. The composition has advantages, for example, that it eliminates the necessity of the use of trichloroethane, which is a cause of environmental pollution, and that a pretreatment step can be omitted. The polyolefin resin composition of the present invention provides an injection-molded product having exceedingly good coating suitability unlike the conventional polyolefin resin compositions, which are difficult to be directly coated, and is hence advantageously used in a wide range of fields including interior and exterior automotive parts and household electrical appliances.

While the invention has been described in detail and with reference to specific Examples thereof, it will be apparent to one skilled in the art that various changes and modifications can be made therein without departing from the spirit and scope thereof.

## Claims

1. A polyolefin resin composition which comprises:
(a) from 20 to 79.9 parts by weight of a polyolefin resin ingredient which comprises at least 1% by weight of a modified polyolefin resin having at least one kind of groups selected from hydroxy, carboxyl and carboxylic anhydride groups and having a weight-average molecular weight (M_{w1}) of not less than 50,000;
(b) from 0.1 to 20 parts by weight of a modified polyolefin resin having at least one kind of groups selected from hydroxy, carboxyl and carboxylic anhydride groups and having a weight-average molecular weight (M_{w2}) of from not less than 500 to less than 50,000 and a melting point of more than 100°C; and
(c) from 79.9 to 20 parts by weight of a rubber ingredient comprising a copolymer rubber, the total amount of components (a), (b) and (c) being 100 parts by weight.

2. The polyolefin resin composition as claimed in claim 1, wherein the ratio of the weight-average molecular weight (M_{w1}) of the modified polyolefin resin in component (a) to the weight-average molecular weight (M_{w2}) of component (b), M_{w1}/M_{w2}, is not less than 2.0.

3. The polyolefin resin composition as claimed in claim 1, which further comprises (d) an accelerator in an amount of from 0.005 to 10 parts by weight per 100 parts by weight of the total amount of components (a), (b) and (c).

4. The polyolefin resin composition as claimed in claim 3, wherein the accelerator comprises at least one of an organotin compound and a tertiary amine compound.

5. The polyolefin resin composition as claimed in claim 1, which further comprises (e) a filler in an amount of not more than 100 parts by weight per 100 parts by weight of the total amount of components (a), (b) and (c).

6. The polyolefin resin composition as claimed in claim 1, wherein the content of hydroxy, carboxyl and carboxylic anhydride groups in the modified polyolefin resin in component (a) is from 0.001 to 2.0 mmol/g.

7. The polyolefin resin composition as claimed in claim 1, wherein the modified polyolefin resin of component (b) has a weight-average molecular weight of from 1,000 to 45,000.

8. The polyolefin resin composition as claimed in claim 7, wherein the modified polyolefin resin of component (b) has a weight-average molecular weight of from 3,000 to 40,000.

9. The polyolefin resin composition as claimed in claim 8, wherein the modified polyolefin resin of component (b) has a weight-average molecular weight of from 5,000 to 30,000.

10. The polyolefin resin composition as claimed in claim 1, wherein the content of hydroxy, carboxyl and carboxylic anhydride groups in the modified polyolefin resin of component (b) is from 0.01 to 6.0 mmol/g.

11. The polyolefin resin composition as claimed in claim 1, wherein the copolymer rubber of component (c) is selected from the group consisting of ethylene/α-olefin copolymer rubbers, isoprene/isobutylene copolymer rubbers and styrene copolymer rubbers.

12. The polyolefin resin composition as claimed in claim 11, wherein the copolymer rubber has an MFR of not more than 100 g/10 min and not less than 0.001 g/10 min as determined at 230°C under a load of 2.16 kg.

13. The polyolefin resin composition as claimed in claim 1, wherein the content of the copolymer rubber in component (c) is at least 10% by weight.

14. A coated product comprising a molded product of a polyolefin resin composition and a coating material coated on the molded product,
(i) wherein the polyolefin resin composition comprises:
(a) from 20 to 79.9 parts by weight of a polyolefin resin ingredient which comprises at least 1% by weight of a modified polyolefin resin having at least one kind of groups selected from hydroxy, carboxyl and carboxylic anhydride groups and having a weight-average molecular weight (M_{w1}) of not less than 50,000;
(b) from 0.1 to 20 parts by weight of a modified polyolefin resin having at least one kind of groups selected from hydroxy, carboxyl and carboxylic anhydride groups and having a weight-average molecular weight (M_{w2}) of from not less than 500 to less than 50,000 and a melting point of more than 100°C; and
(c) from 79.9 to 20 parts by weight of a rubber ingredient comprising a copolymer rubber, the total amount of components (a), (b) and (c) being 100 parts by weight, and
(ii) wherein the coating material comprises at least one material selected from the group consisting of urethane, acrylic and melamine coating materials.

## Patentansprüche

1. Polyolefinharzzusammensetzung, die die folgenden Bestandteile umfasst:
(a) 20 bis 79,9 Gewichtsteile eines Polyolefinharzbestandteils, der mindestens 1 Gew.-% eines modifizierten Polyolefinharzes mit mindestens einer Art von Gruppen, die aus Hydroxygruppen, Carboxylgruppen und Carbonsäureanhydridgruppen ausgewählt sind, und einem massegemittelten Molekulargewicht (M_{w1}) von nicht weniger als 50000 umfasst;
(b) 0,1 bis 20 Gewichtsteile eines modifizierten Polyolefinharzes mit mindestens einer Art von Gruppen, die aus Hydroxygruppen, Carboxylgruppen und Carbonsäureanhydridgruppen ausgewählt sind, und einem massegemittelten Molekulargewicht (M_{w2}) von nicht weniger als 500 bis weniger als 50000 und einem Schmelzpunkt von mehr als 100 °C und
(c) 79,9 bis 20 Gewichtsteile eines Kautschukbestandteils, der einen Copolymerkautschuk umfasst, wobei die Gesamtmenge der Komponenten (a), (b) und (c) 100 Gewichtsteile beträgt.

2. Polyolefinharzzusammensetzung nach Anspruch 1, wobei das Verhältnis des massegemittelten Molekulargewichts (M_{w1}) des modifizierten Polyolefinharzes in der Komponente (a) zu dem massegemittelten Molekulargewicht (M_{w2}) der Komponente (b) (M_{w1}/M_{w2}) nicht weniger als 2,0 beträgt.

3. Polyolefinharzzusammensetzung nach Anspruch 1, die des weiteren (d) einen Beschleuniger in einer Menge von 0,005 bis 10 Gewichtsteilen pro 100 Gewichtsteile der Gesamtmenge der Komponenten (a), (b) und (c) umfasst.

4. Polyolefinharzzusammensetzung nach Anspruch 3, wobei der Beschleuniger mindestens einen Bestandteil aus einer Organozinnverbindung und einer tertiären Aminverbindung umfasst.

5. Polyolefinharzzusammensetzung nach Anspruch 1, die des weiteren (e) einen Füllstoff in einer Menge von nicht mehr als 100 Gewichtsteilen pro 100 Gewichtsteile der Gesamtmenge der Komponenten (a), (b) und (c) umfasst.

6. Polyolefinharzzusammensetzung nach Anspruch 1, wobei der Gehalt an Hydroxygruppen, Carboxylgruppen und Carbonsäureanhydridgruppen in dem modifizierten Polyolefinharz in der Komponente (a) 0,001 bis 2,0 mmol/g beträgt.

7. Polyolefinharzzusammensetzung nach Anspruch 1, wobei das modifizierte Polyolefinharz der Komponente (b) ein massegemitteltes Molekulargewicht von 1000 bis 45000 besitzt.

8. Polyolefinharzzusammensetzung nach Anspruch 7, wobei das modifizierte Polyolefinharz der Komponente (b) ein massegemitteltes Molekulargewicht von 3000 bis 40000 besitzt.

9. Polyolefinharzzusammensetzung nach Anspruch 8, wobei das modifizierte Polyolefinharz der Komponente (b) ein massegemitteltes Molekulargewicht von 5000 bis 30000 besitzt.

10. Polyolefinharzzusammensetzung nach Anspruch 1, wobei der Gehalt an Hydroxygruppen, Carboxylgruppen und Carbonsäureanhydridgruppen in dem modifizierten Polyolefinharz der Komponente (b) 0,01 bis 6,0 mmol/g beträgt.

11. Polyolefinharzzusammensetzung nach Anspruch 1, wobei der Copolymerkautschuk der Komponente (c) aus Ethylen/ -Olefin-Copolymerkautschuken, Isopren/Isobutylen-Copolymerkautschuken und Styrolcopolymerkautschuken ausgewählt ist.

12. Polyolefinharzzusammensetzung nach Anspruch 11, wobei der Copolymerkautschuk einen Schmelzindex von nicht mehr als 100 g/10 min und nicht weniger als 0,001 g/10 min gemäß Bestimmung bei 230 °C unter einer Last von 2,16 kg aufweist.

13. Polyolefinharzzusammensetzung nach Anspruch 1, wobei der Gehalt des Copolymerkautschuks in der Komponente (c) mindestens 10 Gew.-% beträgt.

14. Beschichtetes Produkt, das ein Formprodukt einer Polyolefinharzzusammensetzung und ein auf das Formprodukt aufgetragenes Beschichtungsmaterial umfasst,
(i) wobei die Polyolefinharzzusammensetzung die folgenden Bestandteile umfasst:
(a) 20 bis 79,9 Gewichtsteile eines Polyolefinharzbestandteils, der mindestens 1 Gew.-% eines modifizierten Polyolefinharzes mit mindestens einer Art von Gruppen, die aus Hydroxygruppen, Carboxylgruppen und Carbonsäureanhydridgruppen ausgewählt sind, und einem massegemittelten Molekulargewicht (M_{w1}) von nicht weniger als 50000 umfasst;
(b) 0,1 bis 20 Gewichtsteile eines modifizierten Polyolefinharzes mit mindestens einer Art von Gruppen, die aus Hydroxygruppen, Carboxylgruppen und Carbonsäureanhydridgruppen ausgewählt sind, und einem massegemittelten Molekulargewicht (M_{w2}) von nicht weniger als 500 bis weniger als 50000 und einem Schmelzpunkt von mehr als 100 °C und
(c) 79,9 bis 20 Gewichtsteile eines Kautschukbestandteils, der einen Copolymerkautschuk umfasst, wobei die Gesamtmenge der Komponenten (a), (b) und (c) 100 Gewichtsteile beträgt; und
(ii) wobei das Beschichtungsmaterial mindestens ein Material umfasst, das aus Urethan-, Acryl- und Melaminbeschichtungsmaterialien ausgewählt ist.

## Revendications

1. Composition à base d'une résine polyoléfinique qui comprend :
(a) de 20 à 79,9 parties en poids d'une résine polyoléfinique qui comprend au moins 1 % en poids d'une résine polyoléfinique modifiée contenant au moins un type de groupes choisi parmi les groupes hydroxy, carboxyle et anhydride carboxylique et ayant une masse moléculaire moyenne en poids (M_{w1}) non inférieure à 50 000 ;
(b) de 0,1 à 20 parties en poids d'une résine polyoléfinique modifiée contenant au moins un type de groupes choisi parmi les groupes hydroxy, carboxyle et anhydride carboxylique et ayant une masse moléculaire moyenne en poids (M_{w2}) non inférieure à 500 et inférieure à 50 000 et un point de fusion supérieur à 100°C ; et
(c) de 79,9 à 20 parties en poids d'un caoutchouc comprenant un caoutchouc à base d'un copolymère, la quantité totale des composants (a), (b) et (c) correspondant à 100 parties en poids.

2. Composition à base d'une résine polyoléfinique selon la revendication 1, dans laquelle le rapport de la masse moléculaire moyenne en poids (M_{w1}) de la résine polyoléfinique modifiée dans le composant (a) à la masse moléculaire moyenne en poids (M_{w2}) du composant (b), M_{w1}/M_{w2}, n'est pas inférieur à 2,0.

3. Composition à base d'une résine polyoléfinique selon la revendication 1 qui comprend, en outre, (d) un accélérateur en une quantité de 0,005 à 10 parties en poids pour 100 parties en poids de la quantité totale des composants (a), (b) et (c).

4. Composition à base d'une résine polyoléfinique selon la revendication 3, dans laquelle l'accélérateur comprend au moins un organo-stannique et une amine tertiaire.

5. Composition à base d'une résine polyoléfinique selon la revendication 1 qui comprend, en outre, (e) une charge en une quantité non supérieure à 100 parties en poids pour 100 parties en poids de la quantité totale des composants (a), (b) et (c).

6. Composition à base d'une résine polyoléfinique selon la revendication 1, dans laquelle la teneur en groupes hydroxy, carboxyle et anhydride carboxylique de la résine polyoléfinique modifiée dans le composant (a) est de 0,001 à 2,0 mmoles/g.

7. Composition à base d'une résine polyoléfinique selon la revendication 1, dans laquelle la résine polyoléfinique modifiée du composant (b) a une masse moléculaire moyenne en poids de 1000 à 45 000.

8. Composition à base d'une résine polyoléfinique selon la revendication 7, dans laquelle la résine polyoléfinique modifiée du composant (b) a une masse moléculaire moyenne en poids de 3000 à 40 000.

9. Composition à base d'une résine polyoléfinique selon la revendication 8, dans laquelle la résine polyoléfinique modifiée du composant (b) a une masse moléculaire moyenne en poids de 5000 à 30 000.

10. Composition à base d'une résine polyoléfinique selon la revendication 1, dans laquelle la teneur en groupes hydroxy, carboxyle et anhydride carboxylique de la résine polyoléfinique modifiée du composant (b) est de 0,01 à 6,0 mmoles/g.

11. Composition à base d'une résine polyoléfinique selon la revendication 1, dans laquelle le caoutchouc à base d'un copolymère du composant (c) est choisi dans le groupe constitué des caoutchoucs à base d'un copolymère éthylène/α-oléfine, des caoutchoucs à base d'un copolymère isoprène/isobutylène et des caoutchoucs à base d'un copolymère de styrène.

12. Composition à base d'une résine polyoléfinique selon la revendication 11, dans laquelle le caoutchouc à base d'un copolymère a une valeur MFR, déterminée à 230°C sous une charge de 2,16 kg, non supérieure à 100 g/10 min et non inférieure à 0,001 g/10 min.

13. Composition à base d'une résine polyoléfinique selon la revendication 1, dans laquelle la teneur de caoutchouc à base d'un copolymère dans le composant (c) est d'au moins 10 % en poids.

14. Produit revêtu comprenant un produit moulé à base d'une composition de résine polyoléfinique et un matériau de revêtement revêtu sur le produit moulé,
(i) dans lequel la composition à base d'une résine polyoléfinique comprend :
(a) de 20 à 79,9 parties en poids d'une résine polyoléfinique qui comprend au moins 1 % en poids d'une résine polyoléfinique modifiée contenant au moins un type de groupes choisi parmi les groupes hydroxy, carboxyle et anhydride carboxylique et ayant une masse moléculaire moyenne en poids (M_{w1}) non inférieure à 50 000 ;
(b) de 0,1 à 20 parties en poids d'une résine polyoléfinique modifiée contenant au moins un type de groupes choisi parmi les groupes hydroxy, carboxyle et anhydride carboxylique et ayant une masse moléculaire moyenne en poids (M_{w2}) non inférieure à 500 et inférieure à 50 000 et un point de fusion supérieur à 100°C ; et
(c) de 79,9 à 20 parties en poids d'un caoutchouc comprenant un caoutchouc à base d'un copolymère, la quantité totale des composants (a), (b) et (c) étant de 100 parties en poids, et
(ii) dans lequel le matériau de revêtement comprend au moins un matériau choisi dans le groupe constitué des matériaux de revêtement de type uréthanne, acrylique et mélamine.
